# EUROPEAN PATENT APPLICATION

(11) **EP 4 421 894 A1**
(43) Date of publication of application: **28.08.2024**
(21) Application number: 24158854.0
(22) Date of filing: 21.02.2024
(51) Int. Cl.: H01M 4/04, H01M 4/133, H01M 4/134, H01M 4/1393, H01M 4/1395, H01M 4/36, H01M 4/38, H01M 4/587, H01M 4/62, H01M 10/0525, H01M 4/02

(54) **NEGATIVE ELECTRODE SLURRY, NEGATIVE ELECTRODE, AND RECHARGEABLE BATTERY**

(30) Priority: 21.02.2023 JP 2023024917; 16.02.2024 KR 20240022895
(71) Applicant: Samsung SDI Co., Ltd., Yongin-si, Gyeonggi-do 17084 (KR)
(72) Inventor: FUKATANI, Tomoyuki, Yokohama-shi (JP)
(74) Representative: Marks & Clerk LLP

(57) **Abstract**

A negative electrode slurry that can further improve cycle characteristics of a rechargeable battery at high temperatures compared to conventional ones is provided. The negative electrode slurry includes a negative electrode active material including a first active material containing silicon atoms in an amount of greater than or equal to about 5 wt% and less than or equal to about 100 wt%, a binder for binding the negative electrode active material, and a solvent for negative electrode slurry dispersing the negative electrode active material and the binder, wherein the first active material contains silicon atoms in an amount of greater than or equal to about 20 wt% and less than or equal to about 100 wt%, the binder includes a particulate dispersed body and a water-soluble copolymer, the water-soluble copolymer includes a copolymer (AA-NaSS-AN-based copolymer) containing an acrylic acid-based monomer unit, a sodium styrene sulfonate monomer unit, and an acrylonitrile-based monomer unit, a weight average molecular weight of the copolymer is about 300,000 to about 2,000,000, and when a sum of the negative electrode active material and the binder is 100 wt%, and an amount of the water-soluble copolymer is greater than or equal to about 0.5 wt% and less than or equal to about 2 wt%.

## Description

### BACKGROUND

### 1. Field

A negative electrode slurry, a negative electrode formed using the negative electrode slurry, and a rechargeable battery including the negative electrode are disclosed.

### 2. Description of the Related Art

One method for securing high capacity of non-aqueous electrolyte rechargeable batteries including rechargeable lithium ion batteries is to apply a silicon-containing active material including a larger amount of intercalated lithium than an existing graphite-based active material.

Because the silicon-containing active materials exhibit a large volume change due to intercalation/deintercalation of lithium, a negative electrode mixture layer violently expands and contracts during the charge and discharge. As a result, there are problems of decreasing electronic conductivity between negative electrode active material and negative electrode active material, isolating the silicon-containing active material in a mixture layer, blocking a conductive path between the negative electrode active material and a current collector, and the like and thus deteriorating cycle characteristics of the rechargeable batteries.

For the purpose of suppressing expansion of the negative electrode, the present inventor considered producing a negative electrode using a negative electrode slurry including an acrylic acid-acrylonitrile-based copolymer as a binder, as shown in Patent Document 1.

### [Prior art]

[Patent Document 1] Japanese Patent Laid-Open No. 2020-64465

### SUMMARY

The present disclosure provides further improvement of cycle characteristics of a rechargeable battery at high temperatures, which is significantly improved by the present inventor through the invention described in Patent Document 1.

The negative electrode slurry, negative electrode, and rechargeable battery according to some embodiments are as follows.

A negative electrode slurry according to some embodiments includes a negative electrode active material including a first active material containing silicon atoms in an amount of greater than or equal to about 5 wt% and less than or equal to about 100 wt%, a binder for binding the negative electrode active material, and a solvent for negative electrode slurry dispersing the negative electrode active material and the binder,
wherein the first active material contains silicon atoms in an amount of greater than or equal to about 20 wt% and less than or equal to about 100 wt%,
the binder includes a particulate dispersed body and a water-soluble copolymer,
the water-soluble copolymer includes a copolymer (hereinafter also referred to as AA-NaSS-AN-based copolymer) containing an acrylic acid-based monomer unit, a sodium styrene sulfonate monomer unit, and an acrylonitrile-based monomer unit,
a weight average molecular weight of the copolymer is about 300,000 to about 2,000,000, and
when a sum of the negative electrode active material and the binder is 100 wt%, an amount of the water-soluble copolymer is greater than or equal to about 0.5 wt% and less than or equal to about 2 wt%.

An amount of the acrylonitrile-based monomer unit in the copolymer may be greater than or equal to about 10 wt% and less than or equal to about 50 wt% based on 100 wt% of the copolymer.

The solvent for the negative electrode slurry may be an aqueous solvent.

The first active material may include at least one selected from a composite of silicon-containing particulates and a carbon material, silicon particulates, and an alloy containing silicon as a base material.

An amount of the sodium styrene sulfonate monomer unit in the copolymer may be greater than or equal to about 10 wt% and less than or equal to about 50 wt% based on 100 wt% of the copolymer.

The copolymer may further include a monomer unit copolymerizable with the acrylic acid-based monomer unit, the sodium styrene sulfonate monomer unit, or the acrylonitrile-based monomer unit.

The water-soluble copolymer may further include a cellulose ether containing a carboxymethyl group or a salt of a cellulose ether containing a carboxymethyl group.

The negative electrode slurry may have a viscosity at 25 °C of greater than or equal to about 1000 mPa·s and less than or equal to about 5000 mPa·s.

The negative electrode active material may further include a graphite-based active material as a second active material.

The negative electrode slurry may further include a conductive agent.

A negative electrode includes a negative electrode active material including a first active material containing silicon atoms in an amount of greater than or equal to about 5 wt% and less than or equal to about 100 wt%; and a binder for binding the negative electrode active material,
wherein the first active material contains silicon atoms in an amount of greater than or equal to about 20 wt% and less than or equal to about 100 wt%,
the binder includes a particulate dispersed body and a water-soluble copolymer,
the water-soluble copolymer includes a copolymer containing an acrylic acid-based monomer unit, a sodium styrene sulfonate monomer unit, and an acrylonitrile-based monomer unit,
a weight average molecular weight of the copolymer is about 300,000 to about 2,000,000, and
when a sum of the negative electrode active material and the binder is 100 wt%, an amount of the water-soluble copolymer is greater than or equal to about 0.5 wt% and less than or equal to about 2 wt%.

An amount of the acrylonitrile-based monomer unit in the copolymer may be greater than or equal to about 10 wt% and less than or equal to about 50 wt% based on 100 wt% of the copolymer.

The first active material may include at least one selected from a composite of silicon-containing particulates and a carbon material, silicon particulates, and an alloy containing silicon as a base material.

An amount of the sodium styrene sulfonate monomer unit in the copolymer may be greater than or equal to about 10 wt% and less than or equal to about 50 wt% based on 100 wt% of the copolymer.

The copolymer may further include a monomer unit copolymerizable with the acrylic acid-based monomer unit, the sodium styrene sulfonate monomer unit, or the acrylonitrile-based monomer unit.

The water-soluble copolymer may further include a cellulose ether containing a carboxymethyl group or a salt of a cellulose ether containing a carboxymethyl group.

The negative electrode active material may further include a graphite-based active material as a second active material.

The negative electrode may further include a conductive agent.

The negative electrode may have an areal capacity of greater than or equal to about 3.5 mAh/cm² and less than or equal to about 10 mAh/cm².

A non-aqueous electrolyte rechargeable battery includes a positive electrode, a negative electrode, a separator, and an electrolyte solution, wherein the negative electrode is the aforementioned negative electrode.

At least some of the above and other features of the invention are set out in the claims.

According to the present disclosure, the negative electrode slurry can sufficiently suppress capacity deterioration of a rechargeable battery using a silicon-containing active material that has a large volume change due to lithium intercalation and deintercalation due to charging and discharging at high temperature.

### DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means mixtures, laminates, composites, copolymers, alloys, blends, reaction products, and the like of constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

As used herein, copolymer refers to a polymer that includes two or more (structural) units different.

The glass transition temperature may be measured by DSC (Differential Scanning Calorimetry).

The average particle diameter may be measured by a method well known to those skilled in the art, for example, may be measured by a particle size analyzer, or may be measured by a transmission electron microscopic image or a scanning electron microscopic image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or length of the long axis) of about 20 particles at random in a scanning electron microscope image.

Hereinafter, a detailed configuration of a rechargeable battery according to some embodiments will be described.

### <1. Non-aqueous Electrolyte Rechargeable Battery>

A rechargeable lithium ion battery according to some embodiments includes a positive electrode, a negative electrode, a separator, and a non-aqueous electrolyte.

The charging reached voltage (oxidation-reduction potential) of this rechargeable lithium ion battery may be greater than or equal to about 4.0 V (vs. Li/Li⁺) and less than or equal to about 5.0 V, or greater than or equal to about 4.2 V and less than or equal to about 5.0 V. The shape of the rechargeable lithium ion battery is not particularly limited, but it may be for example, cylindrical, prismatic, laminate-type, or button-type, and the like.

### (1-1. Positive Electrode)

The positive electrode includes a positive electrode current collector and a positive electrode mixture layer formed on the positive electrode current collector.

The positive electrode current collector may be any conductor as long as it is a conductor, may be, for example, plate-shaped or thin-shaped, and desirably made of aluminium, stainless steel, nickel-coated steel, or the like. The positive electrode mixture layer includes a positive electrode active material, and may further include a conductive agent and a binder for a positive electrode.

The positive electrode active material may be, for example, a transition metal oxide containing lithium or solid solution oxide, and is not particularly limited as long as it is a material capable of electrochemically intercalating and deintercalating lithium ions. Examples of the transition metal oxide containing lithium may include Li_{1.0}Ni_{0.88}Co_{0.1}Al_{0.01}Mg_{0.01}O₂, etc. In addition, the transition metal oxide containing lithium may include Li·Co-based composite oxides such as LiCoO₂, etc., and Li·Ni·Co-Mn-based composite oxide such as LiNiₓCo_{y}Mn_{z}O₂, etc., Li-Ni-based composite oxide, such as LiNiO₂, etc., or Li-Mn-based composite oxide, such as LiMn₂O₄, etc. Examples of the solid solution oxide may include, LiₐMnₓCo_{y}Ni_{z}O₂ (1.150≤a≤1.430, 0.45≤x≤0.6, 0.10≤y≤0.15, and 0.20≤z≤0.28), LiMn_{1.5}Ni_{0.5}O₄, and the like. On the other hand, the amount (amount ratio) of the positive electrode active material is not particularly limited, and any amount applicable to the positive electrode mixture layer of the non-aqueous electrolyte rechargeable battery may be sufficient. Moreover, these compounds may be used independently, or plural types may be mixed and used.

The conductive agent is not particularly limited as long as it is used to increase the conductivity of the positive electrode. Examples of the conductive agent include those containing at least one selected from carbon black, natural graphite, artificial graphite, and fibrous carbon. Examples of the carbon black include furnace black, channel black, thermal black, ketjen black, and acetylene black.

Examples of the fibrous carbon include carbon nanotubes, graphene, and carbon nanofibers. The amount of the conductive agent is not particularly limited, and any amount applicable to the positive electrode mixture layer of the non-aqueous electrolyte rechargeable battery may be sufficient.

Examples of the binder for the positive electrode may include a fluorine-containing resin such as polyvinylidene fluoride, an ethylene-containing resin such as a styrene-butadiene rubber, and an ethylene-propylene-diene terpolymer, an acrylonitrile-butadiene rubber, a fluororubber, polyvinyl acetate, polymethylmethacrylate, polyethylene, polyvinyl alcohol, carboxy methyl cellulose or carboxy methyl cellulose derivatives (such as a salt of carboxymethyl cellulose), or nitrocellulose. The binder for the positive electrode may be any binder capable of binding the positive electrode active material and the conductive agent on the positive electrode current collector, and is not particularly limited.

### (1-2. Negative Electrode)

The negative electrode includes a negative electrode current collector and a negative electrode mixture layer formed on the negative electrode current collector.

The negative electrode current collector may be any conductor as long as it is a conductor, for example, a plate-shaped or thin-shaped one, and may be desirably composed of copper, stainless steel, nickel-plated steel, or the like.

The negative electrode mixture layer may include, for example, a negative electrode active material and a binder for a negative electrode (i.e., a negative electrode binder).

The configuration of the negative electrode mixture layer is a characteristic part of the present disclosure, and will be described later in detail.

### (1-3. Separator)

The separator is not particularly limited, and any separator may be used as long as it is used as a separator of a rechargeable lithium ion battery. The separator may be a porous film or a non-woven fabric having excellent high rate discharge performance that may be used alone or with other materials. Examples of the resin constituting the separator may include a polyolefin-based resin such as polyethylene and polypropylene; a polyester-based resin such as polyethylene terephthalate and polybutylene terephthalate; polyvinylidene difluoride, a vinylidene difluoride-hexafluoropropylene copolymer, a vinylidene fluoride-perfluorovinylether copolymer, a vinylidene difluoride-tetrafluoroethylene copolymer, a vinylidene difluoride-trifluoroethylene copolymer, a vinylidene fluoride-fluoroethylene copolymer, a vinylidene fluoride-hexafluoroacetone copolymer, a vinylidene difluoride-ethylene copolymer, a vinylidene difluoride-propylene copolymer, a vinylidene fluoride-vinylidene difluoride-trifluoro propylene copolymer, a vinylidene difluoride-tetrafluoroethylene-hexafluoropropylene copolymer, a vinylidene fluoride-ethylene-tetrafluoroethylene copolymer, or a vinylidene difluoride-ethylene-tetrafluoroethylene copolymer. On the other hand, the porosity of the separator is not particularly limited, and may be any porosity which a separator of a conventional rechargeable lithium ion battery has.

On the surface of the separator, a heat-resistant layer including inorganic particles for improving heat resistance, or a layer including an adhesive for adhering to the electrode to fix a battery element may be provided. The inorganic particles may include Al₂O₃, AlOOH, Mg(OH)₂, SiO₂, and the like. Examples of the adhesive may include a vinylidene fluoride-hexafluoropropylene copolymer, an acid-modified product of a vinylidene fluoride polymer, and a styrene-(meth)acrylic acid ester copolymer.

### (1-4. Non-aqueous Electrolytic Solution)

For the non-aqueous electrolyte solution, a conventionally used non-aqueous electrolyte solution for a rechargeable lithium ion battery may be used without particular limitation. The non-aqueous electrolyte solution has a composition in which an electrolytic salt is contained in a non-aqueous solvent that is a solvent for an electrolyte solution. The non-aqueous solvent may include, for example, cyclic carbonate esters such as propylene carbonate, ethylene carbonate, butylene carbonate, chloroethylene carbonate, fluoroethylene carbonate, or vinylene carbonate, cyclic esters such as γ-butyrolactone or γ-valerolactone, linear carbonates such as dimethyl carbonate, diethyl carbonate, or ethylmethyl carbonate, linear esters such as methyl formate, methyl acetate, methyl butyrate, ethyl propionate, or propyl propionate, ethers such as tetrahydrofuran or a derivative thereof, 1,3-dioxane, 1,4-dioxane, 1,2-dimethoxyethane, 1,4-dibutoxyethane, methyldiglyme, ethylene glycol monopropyl ether, or propylene glycol monopropyl ether, nitriles such as acetonitrile and benzonitrile, dioxolane or a derivative thereof, ethylene sulfide, sulfolane, sultone, or a derivative thereof, which may be used alone or in a mixture of two or more. On the other hand, when two or more of the non-aqueous solvents are mixed and used, the mixing ratio of each non-aqueous solvent may be a mixing ratio that can be used in a conventional rechargeable lithium ion battery.

Examples of the electrolytic salt may include an inorganic ion salt including lithium (Li), sodium (Na), or potassium (K) such as LiClO₄, LiBF₄, LiAsF₆, LiPF₆, LiPF₆₋ₓ(CₙF₂ₙ₊₁)ₓ [provided that 1<x<6, n=1 or 2], LiSCN, LiBr, Lil, Li₂SO₄, Li₂B₁₀Cl₁₀, NaClO₄, Nal, NaSCN, NaBr, KClO₄, or KSCN, an organic ion salt as such LiCF₃SO₃, LiN(CF₃SO₂)₂, LiN(C₂F₅SO₂)₂, LiN(CF₃SO₂)(C₄F₉SO₂), LiC(CF₃SO₂)₃, LiC(C₂F₅SO₂)₃, (CH₃)₄NBF₄, (CH₃)₄NBr, (C₂H₅)₄NClO₄, (C₂H₅)₄Nl, (C₃H₇)₄NBr, (n-C₄H₉)₄NClO₄, (n-C₄H₉)₄NI, (C₂H₅)₄N-maleate, (C₂H₅)₄N-benzoate, (C₂H₅)₄N-phthalate, lithium stearyl sulfate, lithium octyl sulfate, or lithium dodecyl benzene sulfonate, and these ionic compounds may be used alone or in a mixture of two or more. On the other hand, the concentration of the electrolytic salt is the same as in the non-aqueous electrolyte solution used in the conventional rechargeable lithium ion battery, without particular limitation. In some embodiments, the non-aqueous electrolyte solution may include the aforementioned lithium compound (electrolytic salt) at a concentration of greater than or equal to about 0.8 mol/l and less than or equal to about 1.5 mol/l.

On the other hand, various additives may be added to the non-aqueous electrolyte solution. Examples of such additives may include an additive that acts for a negative electrode, an additive that acts for a positive electrode, an ester-based additive, a carbonate ester-based additive, a sulfuric acid ester-based additive, a phosphoric acid ester-based additive, a boric acid ester-based additive, an anhydride-based additive, and an electrolyte-based additive. One of these may be added to the non-aqueous electrolyte, or a plurality of types of additives may be added to the non-aqueous electrolyte.

### <2. Manufacturing method of Non-aqueous Electrolyte Rechargeable Battery>

Hereinafter, the manufacturing method of a rechargeable lithium ion battery is described. The positive electrode may be manufactured as follows. First, a mixture of a positive electrode active material, a conductive agent, and a binder for the positive electrode in a desired ratio is dispersed in solvent (e.g., N-methyl-2-pyrrolidone) for a positive electrode slurry to form a positive electrode slurry. Subsequently, this positive electrode slurry is coated on the positive electrode current collector and dried to form a positive electrode mixture layer. In addition, the coating method is not specifically limited. The coating method may be, for example, a knife coater method, a gravure coater method, a reverse roll coater method, or a slit die coater method. Each of the coating methods may be also performed by the same method. Next, the positive electrode mixture layer may be pressed to a desired density by a press machine. Thereby, a positive electrode is manufactured.

The negative electrode may be also manufactured in the same way as the positive electrode. First, a negative electrode slurry is prepared by dispersing a mixture of materials constituting the negative electrode mixture layer in a solvent for negative electrode slurry (e.g., an aqueous solvent such as water). Then, the negative electrode slurry is coated onto the negative electrode current collector and dried to form a negative electrode mixture layer. Subsequently, the negative electrode mixture layer is pressed to a desired density with a press machine. Accordingly, a negative electrode is manufactured.

Then, an electrode structure is produced by sandwiching a separator between the positive electrode and the negative electrode. Then, the electrode structure is processed into a desired shape (e.g., cylindrical, prismatic, laminated, buttoned, etc.), and inserted into a container of the above shape. Then, by injecting the non-aqueous electrolyte solution into the container, the non-aqueous electrolyte is impregnated into the pores in the separator and the voids of the positive electrode and the negative electrode. Accordingly, a rechargeable lithium ion battery is manufactured.

### <3. Characteristics of Negative Electrode Binder Composition>

Hereinafter, the negative electrode mixture layer according to an embodiment and the negative electrode slurry used to form the negative electrode mixture layer will be described in detail.

### (3-1. Negative Electrode Slurry)

As described above, the negative electrode slurry includes a negative electrode active material and a binder for a negative electrode. The negative electrode slurry further includes a solvent for negative electrode slurry in which the negative electrode active material and the binder for a negative electrode are dispersed.

The negative electrode active material may include, for example, a Si-based active material (also referred to as a first active material), which is a silicon-containing active material containing silicon atoms, and a graphite-based active material (also referred to as a second active material) containing graphite.

Examples of the Si-based active material may include, for example, a composite material (also referred to as a silicon-carbon composite active material) of silicon-containing particulates such as silicon (Si) or silicon oxide (SiOₓ (0<x≤2)), and the like and carbon materials such as graphitic carbon or amorphous carbon, silicon particulates, or an alloy based on silicon. Examples of the graphite-based active material may include, for example, at least one active material selected from cokes such as coal-based coke, petroleum-based pure coke, calcined coke, and needle coke, artificial graphite obtained by graphitizing graphite precursors such as mesophase carbons such as mesophase spherules or bulk mesophase at about 1500 °C or higher, or for example about 2800 °C to about 3200 °C, natural graphite in the form of scales, lumps or granulated spheroids, a mixture of artificial graphite and natural graphite, natural graphite coated with artificial graphite, and the like. These may be subjected to chemical or physical treatment, and treatment methods may include pulverization, classification, granulation, lamination, compression, compounding, mixing, coating, oxidation, vapor deposition, mechanochemical treatment, angle-removal, spheroidization, curvature, heat treatment, etc. In the case of artificial graphite, either before or after the graphitization treatment may be possible, these treatment methods may be combined. Examples of the artificial graphite may include, but are not limited to, MCMB, MCF, and MAG.

From the viewpoint of sufficiently increasing the charge/discharge capacity of the negative electrode mixture layer, an amount ratio of the graphite-based active material and the Si-based active material may be adjusted, for example, so that the specific capacity (unit: mAh/g) of the Si-based active material may be 3.5 times or more relative to the specific capacity (unit: mAh/g) of the graphite-based active material.

In order to realize such a capacity ratio, the Si-based active material contains silicon atoms in an amount of greater than or equal to about 20 wt% and less than or equal to about 100 wt% (e.g. based on the total amount, 100 wt%, of the Si-based active material), and the amount of the Si-based active material in the negative electrode active material is greater than or equal to about 5 wt% and less than or equal to about 100 wt% (e.g. based on the total amount, 100 wt%, of the negative electrode active material).

The negative electrode active material may further include, in addition to the above, for example, contain at least one negative electrode active material selected from a Sn-based active material (e.g., a mixture of tin (Sn) or tin oxide particles and a graphite-based active material, tin particles, or an alloy based on tin), lithium metal and titanium oxide compounds such as Li₄Ti₅O₁₂, lithium nitride, and the like.

The negative electrode binder may be a binder for binding the negative electrode active materials to each other and the negative electrode active materials, optionally, a conductive agent to the negative electrode current collector, and contains a particulate dispersed body and a water-soluble polymer.

The particulate dispersed body may be particulates that may be uniformly dispersed in an aqueous solvent such as water, which is the solvent for negative electrode slurry, and may be particulates of a hydrophobic polymer having a glass transition temperature of greater than or equal to about -50 °C, or more desirably greater than or equal to about -30 °C. The hydrophobic polymer may include, for example, a styrene monomer-derived unit and a butadiene monomer-derived unit. Examples of the hydrophobic polymer may include, for example, a styrene-butadiene copolymer, a modified styrene-butadiene copolymer obtained by vulcanizing a styrene-butadiene copolymer, a styrene acrylic acid ester copolymer, a polyolefin-based polymer, and a polyvinylidene fluoride-based polymer. The hydrophobic polymer may be a synthetic rubber having a glass transition temperature of less than or equal to room temperature (e.g., less than or equal to about 20 ° C). Meanwhile, the aqueous solvent may be, for example, a mixture of water and an organic solvent miscible with water, in addition to the aforementioned water, and the water amount may be greater than or equal to about 50 wt% (e.g. based on the total amount, 100 wt%, of the aqueous solvent). Examples of the organic solvent miscible with water include water-soluble alcohols.

An average particle diameter of the particulate dispersed body may be greater than or equal to about 10 nm and less than or equal to 500 nm, greater than or equal to about 30 nm and less than or equal to 400 nm, or greater than or equal to about 50 nm and less than or equal to 300 nm.

The water-soluble polymer may include an acrylic acid-sodium styrene sulfonate-acrylonitrile-based terpolymer (also referred to as AA-NaSS-AN-based copolymer). The AA-NaSS-AN-based copolymer includes a unit derived from an acrylic acid-based monomer, a unit derived from a sodium styrene sulfonate monomer, and a unit derived from an acrylonitrile-based monomer.

For example, the AA-NaSS-AN-based copolymer may include greater than or equal to about 10 wt% and less than or equal to about 50 wt% of a unit derived from an acrylic acid monomer, greater than or equal to about 10 wt% and less than or equal to about 50 wt% of units derived from a sodium styrene sulfonate monomer, and greater than or equal to about 10 wt% and less than or equal to about 50 wt% of a unit derived from acrylonitrile-based monomers.

The AA-NaSS-AN-based copolymer may include units derived from other monomers copolymerizable with the acrylic acid-based monomer unit, sodium styrene sulfonate monomer unit, and/or acrylonitrile-based monomer unit, and an amount of units derived from the other monomers may be greater than about 0 wt% and less than or equal to about 20 wt%.

If the amount of the unit derived from acrylic acid-based monomer in the AA-NaSS-AN-based copolymer is greater than or equal to about 10 wt%, the AA-NaSS-AN-based copolymer becomes easily soluble in water, thereby improving dispersibility of the negative electrode active material and storage stability of the negative electrode slurry. In addition, if the amount of (structural) units derived from acrylic acid-based monomers in the AA-NaSS-AN-based copolymer is less than or equal to about 50 wt% occurrence of cracks during the coating and drying process of the negative electrode slurry may be further suppressed.

If the amount of the unit derived from the sodium styrene sulfonate monomer in the AA-NaSS-AN-based copolymer is greater than or equal to about 10 wt%, the swelling property of the copolymer into the electrolyte solution may be further suppressed and the high-temperature cycle performance may be further improved. In addition, if an amount of units derived from sodium styrene sulfonate monomer in the AA-NaSS-AN-based copolymer may be less than or equal to about 50 wt%, the occurrence of cracks during the coating and drying process of the negative electrode slurry can be further suppressed.

An amount of the (structural) unit derived from the acrylonitrile-based monomer in the AA-NaSS-AN-based copolymer may be greater than or equal to about 10 wt% so that the adhesion of the negative electrode mixture layer to the negative electrode current collector can be further improved. In addition, if the amount of the (structural) unit derived from the acrylonitrile-based monomer in the AA-NaSS-AN-based copolymer is less than or equal to about 50 wt%, the AA-NaSS-AN-based copolymer becomes more soluble in water, making it easier to improve the dispersibility of the negative electrode active material and the storage stability of the negative electrode slurry.

If an amount of (structural) units derived from other monomers copolymerizable with the acrylic acid-based monomer, the sodium styrene sulfonate monomer, and/or the acrylonitrile-based monomers is less than or equal to about 20 wt% in the AA-NaSS-AN-based copolymer, the occurrence of cracks during the slurry coating and drying process and the peeling of the negative electrode mixture layer from the negative electrode current collector during charging may be suppressed.

The acrylic acid-based monomer may include at least one selected from (meth)acrylic acid, a metal salt of (meth)acrylic acid, an ammonium salt of (meth)acrylic acid, and an amine salt of (meth)acrylic acid.

The metal salt of (meth)acrylic acid may be, for example, an alkali metal salt of (meth)acrylic acid. Examples of the metal salt of (meth)acrylate may include sodium acrylate, lithium acrylate, potassium acrylate, calcium acrylate, magnesium acrylate, sodium methacrylate, lithium methacrylate, potassium methacrylate, and calcium methacrylate. Among these, it is more desirable to use sodium acrylate.

Examples of the ammonium salt of (meth)acrylic acid may include an ammonia-neutralized product of (meth)acrylic acid, a monoethanolamine-neutralized product of (meth)acrylic acid, a diethanolamine-neutralized product of (meth)acrylic acid, and a hydroxylamine-neutralized product of (meth)acrylic acid. Among these, it is more desirable to use an ammonia-neutralized product of acrylic acid.

The other monomer units copolymerizable with the acrylic acid monomer unit, sodium styrene sulfonate monomer unit, and/or acrylonitrile monomer unit in the AA-NaSS-AN-based copolymer may be, for example, water-soluble monomer units.

Examples of the water-soluble monomer may include (meth)acrylamide, 2-acrylamide-2-methylpropanesulfonic acid, N-isopropylacrylamide, N-(2-hydroxyethyl)acrylamide, N-(2-hydroxyethyl)methacrylamide, (meth)acrylic acid 2-hydroxyethyl, vinylpyrrolidone, vinylacetamide, vinylformamide, vinylalcohol, and the like.

A weight average molecular weight of the AA-NaSS-AN-based copolymer is greater than or equal to about 300,000 and less than or equal to about 2 million, for example, less than or equal to about 1.6 million, or less than or equal to about 1.5 million. This weight average molecular weight may be measured by gel permeation chromatography (GPC) as described above in Examples.

If the weight average molecular weight of the AA-NaSS-AN-based copolymer is within the aforementioned range, it is desirable not to add a crosslinkable monomer unit as a unit derived from the other monomers. By not adding a crosslinkable monomer unit, a decrease in the water solubility of the copolymer may be suppressed, and a decrease in cycle performance due to impaired dispersibility of the active material may be suppressed.

In addition, the crosslinkable monomer unit may broadly refer to a compound having at least two or more ethylenically unsaturated bonds, and examples thereof may include methylene bisacrylamide, ethylene glycol di(meth)acrylate, trimethylolpropane tri(meth)acrylate, and divinylbenzene.

It is desirable that the viscosity of the aqueous solution of 9.5 wt% of the AA-NaSS-AN-based copolymer as measured by a type B viscometer at 25 °C is in the range of greater than or equal to about 500 mPa·s and less than or equal to about 20,000 mPa·s.

It is preferable that the viscosity of the aqueous solution of the AA-NaSS-AN-based copolymer is greater than or equal to about 500 mPa·s so that the adhesion of the negative electrode mixture layer to the negative electrode current collector can be improved and good cycle performance can be obtained. In addition, if the viscosity of the aqueous solution of the AA-NaSS-AN-based copolymer is less than or equal to about 20000 mPa·s, excessive viscosity is not imparted to the negative electrode slurry for forming the negative electrode mixture layer, and thus the negative electrode slurry can be applied in a state of high solid component and the negative electrode slurry can be efficiently dried to obtain a negative electrode. Meanwhile, the solid component refers to the remainder when the solvent is removed from the negative electrode slurry or aqueous solution. The solid component in the negative electrode slurry is considered to be equal to the weight of the negative electrode mixture layer in a dry state.

The water-soluble polymer may further include a water-soluble polymer compound other than the AA-NaSS-AN-based copolymer. The water-soluble polymer compound may include, for example, a cellulose ether containing a carboxymethyl group or a salt thereof. Examples of such a water-soluble polymer compound may include an alkali metal salt of carboxymethyl cellulose.

An amount of the AA-NaSS-AN-based copolymer in the water-soluble polymer may be greater than or equal to about 30 wt%, for example, greater than or equal to about 50 wt% (e.g. based on the total amount, 100 wt%, of the water-soluble polymer) from the viewpoint of further reducing expansion of the negative electrode caused by the Si-based active material and peeling of the negative electrode mixture layer from the negative electrode current collector.

The amount of the negative electrode binder in the negative electrode slurry may be greater than or equal to about 2.5 wt% and less than or equal to about 4.5 wt% when the total weight of the negative electrode active material and the negative electrode binder is 100 wt%. If the amount of the binder for the negative electrode is greater than or equal to about 2.5 wt%, cracking and peeling of the negative electrode mixture layer may be further suppressed when the negative electrode mixture layer is coated, dried, and rolled (pressed). Additionally, if the amount of the binder for the negative electrode is less than or equal to about 4.5 wt%, excessive increase in electrode resistance can be suppressed and a negative electrode with good cycle performance can be obtained.

If the total weight of the negative electrode active material and the binder for negative electrode is 100 wt%, the amount of the water-soluble polymer is set to be in the range of greater than or equal to about 0.5 wt% and less than or equal to about 2 wt%. In some embodiments, when the total weight of the negative electrode active material and the binder for negative electrode is 100 wt%, the amount of the water-soluble polymer may be set to be in the range of greater than or equal to about 1 wt% and less than or equal to about 2 wt%.

By setting the amount of the water-soluble polymer to greater than or equal to about 0.5 wt%, expansion of the negative electrode due to the Si-based active material can be sufficiently suppressed. Additionally, if the amount of the water-soluble polymer is less than or equal to about 2 wt%, cracks in the negative electrode mixture layer can be prevented when the negative electrode slurry is coated, dried, and rolled.

When the solid component concentration of the negative electrode slurry is greater than or equal to about 40 wt% and less than or equal to about 60 wt%, the viscosity of the negative electrode slurry measured by a type B viscometer may be greater than or equal to about 1000 mPa·s and less than or equal to about 5000 mPa s, or greater than or equal to about 1500 mPa·s and less than or equal to about 4500 mPa·s at 25 °C. The viscosity of this negative electrode slurry may be adjusted, for example, by the amount of the water-soluble polymer compound added. On the other hand, it is desirable that this viscosity is maintained within the aforementioned range with little change even with the passage of time after preparation.

### (3-2. Negative Electrode Mixture Layer)

As described above, the negative electrode mixture layer is formed by coating the negative electrode slurry to one or both surfaces of the negative electrode current collector, drying, and pressing. In the drying process, the solvent for the negative electrode slurry volatilizes, and solid components such as the negative electrode active material and/or the binder for the negative electrode dispersed in the negative electrode slurry remain on the negative electrode current collector to form the negative electrode mixture layer, and therefore an amount ratio of each component in the negative electrode mixture layer directly reflects an amount ratio of the solid component in the negative electrode slurry.

An areal capacity of the negative electrode after pressing may be in the range of greater than or equal to about 3.5 mAh/cm² and less than or equal to about 10 mAh/cm². In order to form such a negative electrode, it is desirable to coat the aforementioned negative electrode slurry at a coating amount of, for example, a surface density of greater than or equal to about 5 mg/cm² and less than or equal to about 25 mg/cm² or greater than or equal to about 10 mg/cm² and less than or equal to about 20 mg/cm²on one surface.

In addition, a thickness of the negative electrode mixture layer after drying and pressing, as the thickness of one surface, may be greater than or equal to about 50 µm and less than or equal to about 150 µm.

If the coating amount and thickness of the negative electrode mixture layer are within this ranges, the charge/discharge capacity of the rechargeable lithium ion battery can be increased.

Additionally, the negative electrode mixture layer may further include a conductive agent. As the conductive agent, for example, those exemplified as those used in the positive electrode can be used.

### <4. Effects of the Present Embodiment >

According to the negative electrode slurry configured as above, the negative electrode mixture layer formed by this negative electrode slurry, and the negative electrode, the following effects are achieved.

Because the binder includes a particulate dispersed body and a water-soluble polymer including the AA-NaSS-AN-based copolymer, the weight average molecular weight of the AA-NaSS-AN-based copolymer is about 300,000 to about 2 million, the amount of the water-soluble polymer is greater than or equal to about 0.5 wt% and less than or equal to about 2 wt% based on the total weight of 100 wt% of the negative electrode active material and the binder, the expansion of the negative electrode when the negative electrode active material includes silicon atoms can be sufficiently suppressed, and the occurrence of cracks when coating and drying the negative electrode slurry can be suppressed.

As in the example described in the present embodiment, the above-described effect is especially significantly exhibited when forming a negative electrode with an areal capacity of greater than or equal to about 3.5 mAh/cm² and less than or equal to about 10 mAh/cm² or when forming a cylindrical battery.

### [Examples]

Hereinafter, the present disclosure will be described in detail with specific examples. However, the following examples are merely examples of the present disclosure, and the present disclosure is not limited to the following examples.

In these examples, first, Copolymers A to N shown in Table 1 were synthesized. Next, negative electrode slurries containing these copolymers A to N were prepared, rechargeable battery cells of Examples 1 to 15 and Comparative Examples 1 to 19 were manufactured, and these rechargeable battery cells were evaluated. Hereinafter, each example and comparative example was illustrated.

### (Synthesis of Copolymer A)

54.0 g of acrylic acid, 54.0 g of sodium p-styrene sulfonate, 12.0 g of acrylonitrile, 202.9 g of ion-exchanged water, and 1606 mg of 2,2'-azobis(2-methyl-N-2-hydroxyethylpropionamide) were added to a flask and then, polymerized at 85 °C for 4 hours or more. Subsequently, after concentrating the reaction solution by heating and distillation under a reduced pressure to remove unreacted monomers, ammonia water and ion-exchanged water were added thereto to adjust a solid concentration and pH of a polymer aqueous solution, obtaining a water-soluble Copolymer A aqueous solution containing 9.5 wt% of a polymer at pH 7.5. The obtained Copolymer A had a weight average molecular weight of 960,000 and a molecular weight distribution of 3.3. In addition, the polymer aqueous solution of 9.5 wt% of Copolymer A had viscosity of 10,200 mPa·s at 30 rpm and 25 °C, which was measured by using a B type viscometer. On the other hand, the concentration of the polymer aqueous solution was calculated from weights of non-volatile components (solid components) of the aqueous solution in the state of excluding the unreacted monomers. In addition, the weight average molecular weight and the molecular weight distribution of the copolymer were measured in the following method.

### <Weight Average Molecular Weight and Molecular Weight Distribution>

Gel permeation chromatography (GPC) was used for the measurement. Herein, three columns manufactured by Shodex (linking three columns of OHpak SB-G, SB-805HQ, and SB-804HQ in series) and a 0.2 M aqueous disodium hydrogen phosphate solution as a mobile phase were used to measure data (reference: polyethylene oxide, polyethylene glycol) at 40 °C. On the other hand, a sample solution for the measurement was prepared diluting the aqueous solution at a copolymer concentration of 0.1 wt% with the mobile-phased aqueous solution and filtering it with a disk filter with a pore diameter of 0.2 µm.

### (Synthesis of Copolymer B)

48.0 g of acrylic acid, 48.0 g of sodium p-styrene sulfonate, 24.0 g of acrylonitrile, 202.9 g of ion-exchanged water, and 1753 mg of 2,2'-azobis(2-methyl-N-2-hydroxyethylpropionamide) were added to a flask and then, polymerized at 85 °C for 4 hours or more. Subsequently, the reaction solution was concentrated by heating and distillation under a reduced pressure to remove unreacted monomers, and ammonia water and ion-exchanged water were added thereto to adjust a solid concentration and pH of a polymer aqueous solution, obtaining a water-soluble Copolymer B aqueous solution containing 9.5 wt% of a polymer at pH 7.5. The obtained Copolymer B had a weight average molecular weight of 960,000 and a molecular weight distribution of 3.2. In addition, the obtained polymer aqueous solution of 9.5 wt% of Copolymer B had viscosity of 10,100 mPa·s at 25 °C and 30 rpm, which was measured by using a B type viscometer.

### (Synthesis of Copolymer C)

42.0 g of acrylic acid, 42.0 g of sodium p-styrene sulfonate, 36.0 g of acrylonitrile, 202.9 g of ion-exchanged water, and 1901 mg of 2,2'-azobis(2-methyl-N-2-hydroxyethylpropionamide) were added to a flask and polymerized at 85 °C for 4 hours or more. Subsequently, the reaction solution was concentrated by heating and distillation under a reduced pressure to remove unreacted monomers, and ammonia water and ion-exchanged water were added thereto to adjust a solid concentration and pH of a polymer aqueous solution, preparing a water-soluble Copolymer C aqueous solution containing 9.5 wt% of a polymer at pH 7.5. The obtained Copolymer C had a weight average molecular weight of 920,000 and a molecular weight distribution of 3.1. In addition, the obtained polymer aqueous solution of 9.5 wt% of Copolymer C had viscosity of 9,900 mPa·s at 25 °C and 30 rpm, which was measured by using a B type viscometer.

### (Synthesis of Copolymer D)

39.0 g of acrylic acid, 39.0 g of sodium p-styrene sulfonate, 42.0 g of acrylonitrile, 202.9 g of ion-exchanged water, and 1975 mg of 2,2'-azobis(2-methyl-N-2-hydroxyethylpropionamide) were added to a flask and polymerized at 85 °C for 4 hours or more. Subsequently, the reaction solution was concentrated by heating and distillation under a reduced pressure to remove unreacted monomers, and ammonia water and ion-exchanged water were added thereto to adjust a solid concentration and pH of a polymer aqueous solution, preparing a water-soluble Copolymer D aqueous solution containing 9.5 wt% of a polymer at pH 7.5. The obtained Copolymer D had a weight average molecular weight of 900,000 and a molecular weight distribution of 3.1. In addition, the obtained polymer aqueous solution of 9.5 wt% of Copolymer D had viscosity of 9,200 mPa·s at 25 °C and 30 rpm, which was measured by using a B type viscometer.

### (Synthesis of Copolymer E)

38.5 g of acrylic acid, 27.5 g of sodium p-styrene sulfonate, 44.0 g of acrylonitrile, 208.5 g of ion-exchanged water, and 1,727 mg of 2,2'-azobis(2-methyl-N-2-hydroxyethylpropionamide) were added to a flask and polymerized at 85 °C for 4 hours or more. Subsequently, the reaction solution was concentrated by heating and distillation under a reduced pressure to remove unreacted monomers, and ammonia water and ion-exchanged water were added thereto to adjust a solid concentration and pH of a polymer aqueous solution, preparing a water-soluble Copolymer E aqueous solution containing 9.5 wt% of a polymer at pH 7.5. The obtained Copolymer E had a weight average molecular weight of 900,000 and a molecular weight distribution of 3.3. In addition, the obtained polymer aqueous solution of 9.5 wt% of Copolymer E had viscosity of 9,400 mPa·s at 25 °C and 30 rpm, which was measured by using a B type viscometer.

### (Synthesis of Copolymer F)

32.5 g of acrylic acid, 32.5 g of sodium p-styrene sulfonate, 35.0 g of acrylonitrile, 320.4 g of ion-exchanged water, and 2194 mg of 2,2'-azobis(2-methyl-N-2-hydroxyethylpropionamide) were added to a flask and polymerized at 85 °C for 4 hours or more. Subsequently, the reaction solution was concentrated by heating and distillation under a reduced pressure to remove unreacted monomers, and ammonia water and ion-exchanged water were added thereto to adjust a solid concentration and pH of a polymer aqueous solution, preparing a water-soluble Copolymer F aqueous solution containing 9.5 wt% of a polymer at pH 7.5. The obtained Copolymer F had a weight average molecular weight of 400,000 and a molecular weight distribution of 3.8. In addition, the obtained polymer aqueous solution of 9.5 wt% of Copolymer F had viscosity of 1,900 mPa·s at 25 °C and 30 rpm, which was measured by using a B type viscometer.

### (Synthesis of Copolymer G)

39.0 g of acrylic acid, 39.0 g of sodium p-styrene sulfonate, 42.0 g of acrylonitrile, 160.0 g of ion-exchanged water, and 1975 mg of 2,2'-azobis(2-methyl-N-2-hydroxyethylpropionamide) were added to a flask and polymerized at 85 °C for 4 hours or more. Subsequently, the reaction solution was concentrated by heating and distillation under a reduced pressure to remove unreacted monomers, and ammonia water and ion-exchanged water were added thereto to adjust a solid concentration and pH of a polymer aqueous solution, preparing a water-soluble Copolymer G aqueous solution containing 9.5 wt% of a polymer at pH 7.5. The obtained Copolymer G had a weight average molecular weight of 1,300,000 and a molecular weight distribution of 3.5. In addition, the obtained polymer aqueous solution of 9.5 wt% of Copolymer G had viscosity of 16,000 mPa·s at 25 °C and 30 rpm, which was measured by using a B type viscometer.

### (Synthesis of Copolymer H)

70.0 g of acrylic acid, 30.0 g of acrylonitrile, 110.3 g of a 4 mol/l sodium hydroxide an aqueous solution, 114.5 g of ion-exchanged water, and 1773 mg of 2,2'-azobis(2-methyl-N-2-hydroxyethylpropionamide) were added to a flask and polymerized at 85 °C for 4 hours or more, and 110.3 g of a 4 mol/l sodium hydroxide aqueous solution was added thereto and then, continuously stirred for 4 hours. Subsequently, the reaction solution was concentrated by heating and distillation under a reduced pressure to remove unreacted monomers, and ammonia water and ion-exchanged water were added thereto to adjust a solid concentration and pH of a polymer aqueous solution, preparing a water-soluble Copolymer H aqueous solution containing 9.5 wt% of a polymer at pH 7.5. The obtained Copolymer H had a weight average molecular weight of 920,000 and a molecular weight distribution of 3.3. In addition, the obtained polymer aqueous solution of 9.5 wt% of Copolymer H had viscosity of 12,500 mPa·s at 25 °C and 30 rpm, which was measured by using a B type viscometer.

### (Synthesis of Copolymer I)

60.0 g of acrylic acid, 40.0 g of acrylonitrile, 94.4 g of a 4 mol/l sodium hydroxide aqueous solution, 118.5 g of ion-exchanged water, and 1830 mg of 2,2'-azobis(2-methyl-N-2-hydroxyethylpropionamide) were added to a flask and polymerized at 85 °C for 4 hours or more, and 94.4 g of a 4 mol/l sodium hydroxide aqueous solution was added thereto and then, continuously stirred for 4 hours. Subsequently, the reaction solution was concentrated by heating and distillation under a reduced pressure to remove unreacted monomers, and ammonia water and ion-exchanged water were added thereto to adjust a solid concentration and pH of a polymer aqueous solution, preparing a water-soluble Copolymer I aqueous solution containing 9.5 wt% of a polymer at pH 7.5. The obtained Copolymer I had a weight average molecular weight of 870,000 and a molecular weight distribution of 3.3. In addition, the obtained polymer aqueous solution of 9.5 wt% of Copolymer I had viscosity of 12,000 mPa·s at 25 °C and 30 rpm, which was measured by using a B type viscometer.

### (Synthesis of Copolymer J)

60.0 g of acrylic acid, 60.0 g of sodium p-styrene sulfonate, 202.9 g of ion-exchanged water, and 1458 mg of 2,2'-azobis(2-methyl-N-2-hydroxyethylpropionamide) were added to a flask and polymerized at 85 °C for 4 hours or more. Subsequently, the reaction solution was concentrated by heating and distillation under a reduced pressure to remove unreacted monomers, and ammonia water and ion-exchanged water were added thereto to adjust a solid concentration and pH of a polymer aqueous solution, preparing a water-soluble Copolymer J aqueous solution containing 9.5 wt% of a polymer at pH 7.5. The obtained Copolymer J had a weight average molecular weight of 890,000 and a molecular weight distribution of 3.4. In addition, the obtained polymer aqueous solution of 9.5 wt% of Copolymer J had viscosity of 9,980 mPa·s at 25 °C and 30 rpm, which was measured by using a B type viscometer.

### (Synthesis of Copolymer L)

38.5 g of acrylic acid, 27.5 g of sodium p-styrene sulfonate, 42.9 g of acrylonitrile, 1.1 g of ethylene glycoldimethacrylate, 208.5 g of ion-exchanged water, and 1727 mg of 2,2'-azobis(2-methyl-N-2-hydroxyethylpropionamide) were added to a flask and polymerized at 85 °C for 4 hours or more. Subsequently, the reaction solution was concentrated by heating and distillation under a reduced pressure to remove unreacted monomers, and ammonia water and ion-exchanged water were added thereto to adjust a solid concentration and pH of a polymer aqueous solution, preparing a water-soluble Copolymer L aqueous solution containing 9.5 wt% of a polymer at pH 7.5. The obtained polymer aqueous solution of 9.5 wt% of Copolymer L had viscosity of 18,100 mPa·s at 25 °C and 30 rpm, which was measured by using a B type viscometer. On the other hand, since Copolymer L failed in obtaining a sample solution for the measurement due to clogging in a disk filter during the filtration process, GPC of Copolymer L was marked as immeasurable.

### (Synthesis of Copolymer M)

38.5 g of acrylic acid, 27.5 g of sodium p-styrene sulfonate, 43.89 g of acrylonitrile, 0.11 g of methylenebisacrylamide, 236.7 g of ion-exchanged water, and 1727 mg of 2,2'-azobis(2-methyl-N-2-hydroxyethylpropionamide) were added to a flask and polymerized at 85 °C for 4 hours or more. Subsequently, the reaction solution was concentrated by heating and distillation under a reduced pressure to remove unreacted monomers, and ammonia water and ion-exchanged water were added thereto to adjust a solid concentration and pH of a polymer aqueous solution, preparing a water-soluble Copolymer M aqueous solution containing 9.5 wt% of a polymer at pH 7.5. The obtained polymer aqueous solution of 9.5 wt% of Copolymer M had viscosity of 24,100 mPa·s at 25 °C and 30 rpm, which was measured by using a B type viscometer. On the other hand, since Copolymer M failed in obtaining a sample solution for the measurement due to clogging in a disk filter during the filtration process, GPC of Copolymer M was marked as immeasurable.

### (Synthesis of Copolymer N)

32.5 g of acrylic acid, 32.5 g of sodium p-styrene sulfonate, 35.0 g of acrylonitrile, 536.7 g of ion-exchanged water, and 2560 mg of 2,2'-azobis(2-methyl-N-2-hydroxyethylpropionamide) were added to a flask and polymerized at 85 °C for 4 hours or more. Subsequently, the reaction solution was concentrated by heating and distillation under a reduced pressure to remove unreacted monomers, and ammonia water and ion-exchanged water were added thereto to adjust a solid concentration and pH of a polymer aqueous solution, preparing a water-soluble Copolymer N aqueous solution containing 9.5 wt% of a polymer at pH 7.5

Copolymer N had a weight average molecular weight of 200,000 and a molecular weight distribution of 4.3. In addition, the obtained polymer aqueous solution of 9.5 wt% of Copolymer N had viscosity of 350 mPa·s at 25 °C and 30 rpm, which was measured by using a B type viscometer.

**(Table 1)**

| Copolymer | Copolymer composition (wt%) | | | | | Weight average molecular weight (×10⁴) |
|---|---|---|---|---|---|---|
| | AA | NaSS | AN | EDMA | MBA | |
| A | 45 | 45 | 10 | 0 | 0 | 96 |
| B | 40 | 40 | 20 | 0 | 0 | 96 |
| C | 35 | 35 | 30 | 0 | 0 | 92 |
| D | 32.5 | 32.5 | 35 | 0 | 0 | 90 |
| E | 35 | 25 | 40 | 0 | 0 | 90 |
| F | 32.5 | 32.5 | 35 | 0 | 0 | 40 |
| G | 32.5 | 32.5 | 35 | 0 | 0 | 130 |
| H | 70 | 0 | 30 | 0 | 0 | 92 |
| I | 60 | 0 | 40 | 0 | 0 | 87 |
| J | 50 | 50 | 0 | 0 | 0 | 89 |
| L | 35 | 25 | 39 | 1 | 0 | not measurable |
| M | 35 | 25 | 39.9 | 0 | 0.1 | not measurable |
| N | 35 | 35 | 30 | 0 | 0 | 20 |

Meanwhile, in Table 1, "AA" represents acrylic acid, "NaSS" represents sodium p-styrene sulfonate, "AN" represents acrylonitrile, "EDMA" represents ethylene glycol dimethacrylate, and "MBA" represents methylene bisacrylamide. In addition, the monomer input ratios shown in Table 1 are directly reflected as the amount ratio of each monomer unit in each copolymer after synthesis.

Rechargeable lithium ion battery cells of Examples 1 to 15 and Comparative Examples 1 to 17 were manufactured as follows.

### <Example 1>

### (Manufacture of Negative Electrode)

8.0 g of a silicon-carbon composite active material as a Si-based active material, 46.0 g of artificial graphite active material and 46.0 g of natural graphite active material as a graphite-based active material, 12.94 g of an aqueous solution including 9.5 wt% of Copolymer A, 5.12 g of a dispersion including 0.4 wt% of carbon nanotubes (including 0.6 wt% of a sodium salt of carboxymethyl cellulose (CMC) as a dispersant), and 79.87 g of ion-exchanged water were mixed, and then 3.07 g of an aqueous dispersion including 40 wt% of a particulate dispersed body made of a modified styrene butadiene copolymer was added thereto to prepare a negative electrode slurry. Subsequently, the negative electrode slurry was coated and dried with a reverse roll coater on both surfaces of a copper foil as a negative electrode current collector to form a negative electrode mixture layer with a coating amount (surface density) of 14.1 mg/cm² per side after the drying. Subsequently, the negative electrode mixture layer was pressed to have density of 1.65 g/cc with a roll presser to manufacture a negative electrode with areal capacity of 5.2 mAh/cm².

### (Manufacture of Positive Electrode)

Li_{1.0}Ni_{0.88}Co_{0.1}Al_{0.01}Mg_{0.01}O₂, acetylene black, and polyvinylidene fluoride in a mass powder ratio of 97.7:1.0:1.3 were dispersed in N-methyl-2-pyrrolidone, a solvent for positive electrode slurry, preparing positive electrode slurry. Subsequently, the slurry was coated and dried on one surface of an aluminium foil as a current collector with a reverse roll coater so that a positive electrode mixture layer might have a coating amount of 27.8 mg/cm² (areal density) and then, pressed with a roll presser to have a mixture layer density of 3.65 g/cc, manufacturing a positive electrode.

### (Manufacture of Rechargeable Battery Cell)

After respectively cutting the aforementioned negative and positive electrodes into each square of 29 mm×29 mm and 27 mm×27 mm, welding a nickel and aluminium lead wire thereinto, and interposing a polyethylene porous separator therebetween, 7 of the positive electrodes were stacked with 8 of the negative electrodes to manufacture an electrode laminate. Subsequently, after storing the electrode laminate in an aluminium laminate film with the lead wires pulled out and injecting an electrolyte solution thereinto, the aluminium laminate film was sealed to manufacture a rechargeable battery cell before initial charge. Herein, the electrolyte solution was prepared by dissolving 1 wt% of vinylene carbonate in a solvent of ethylene carbonate/ethylmethyl carbonate/dimethyl carbonate/fluoroethylene carbonate mixed in 10/15/70/5 (a volume ratio), and an injection amount thereof was 1.4 g. The manufactured battery cell was designed to have capacity of 550 mAh.

### <Example 2>

A rechargeable battery cell was manufactured in the same manner as in Example 1, except that Copolymer B was used instead of Copolymer A in the negative electrode manufacturing process of Example 1.

### <Example 3>

A rechargeable battery cell was manufactured in the same manner as in Example 1, except that in the negative electrode manufacturing process of Example 1, Copolymer C was used instead of Copolymer A.

### <Example 4>

A rechargeable battery cell was manufactured in the same manner as in Example 1, except that in the negative electrode manufacturing process of Example 1, Copolymer D was used instead of Copolymer A.

### <Example 5>

A rechargeable battery cell was manufactured in the same manner as in Example 1, except that in the negative electrode manufacturing process of Example 1, Copolymer E was used instead of Copolymer A.

### <Example 6>

In the negative electrode manufacturing process of Example 6, 8.0 g of a silicon-carbon composite active material as a Si-based active material, 46.0 g of artificial graphite active material and 46.0 g of natural graphite active material as a graphite-based active material, 21.75 g of an aqueous solution including 9.5 wt% of Copolymer F, 5.17 g of a dispersion including 0.4 wt% of carbon nanotubes (including 0.6 wt% of CMC as a dispersant), and 61.38 g of ion-exchanged water were mixed, and then 3.10 g of an aqueous dispersion including 40 wt% of a particulate dispersed body made of a modified styrene butadiene copolymer was added thereto to prepare a negative electrode slurry. A rechargeable battery cell was manufactured in the same manner as in Example 1, except that the formulation of the negative electrode slurry was changed and the coating amount (areal density) of the dried negative electrode mixture layer was changed to 14.2 mg/cm² per one surface.

### <Example 7>

In the negative electrode manufacturing process of Example 7, 8.0 g of a silicon-carbon composite active material as a Si-based active material, 46.0 g of artificial graphite active material and 46.0 g of natural graphite active material as a graphite-based active material, 10.76 g of an aqueous solution including 9.5 wt% of water-soluble Copolymer G, 5.11 g of a dispersion including 0.4 wt% of carbon nanotubes (including 0.6 wt% of CMC as a dispersant), and 85.66 g of ion-exchanged water were mixed, and then 3.07 g of an aqueous dispersion including 40 wt% of a particulate dispersed body made of a modified styrene butadiene copolymer was added thereto to prepare a negative electrode slurry. A rechargeable battery cell was manufactured in the same manner as in Example 1, except that the formulation of the negative electrode slurry was changed.

### <Example 8>

In the negative electrode manufacturing process of Example 8, 8.0 g of a silicon-carbon composite active material as a Si-based active material, 46.0 g of artificial graphite active material and 46.0 g of natural graphite active material as a graphite-based active material, 5.39 g of an aqueous solution including 9.5 wt% of Copolymer A, 42.69 g of an aqueous solution including 1.2 wt% of CMC, 5.12 g of a dispersion including 0.4 wt% of carbon nanotubes (including 0.6 wt% of CMC as a dispersant), and 48.23 g of ion-exchanged water were mixed, and then 3.59 g of an aqueous dispersion including 40 wt% of a particulate dispersed body made of a modified styrene butadiene copolymer was added thereto to prepare a negative electrode slurry. A rechargeable battery cell was manufactured in the same manner as in Example 1, except that the formulation of the negative electrode slurry was changed.

### <Example 9>

A rechargeable battery cell was manufactured in the same manner as in Example 8, except that in the negative electrode manufacturing process of Example 8, Copolymer B was used instead of Copolymer A.

### <Example 10>

A rechargeable battery cell was manufactured in the same manner as in Example 8, except that in the negative electrode manufacturing process of Example 8, Copolymer C was used instead of Copolymer A.

### <Example 11>

A rechargeable battery cell was manufactured in the same manner as in Example 8, except that in the negative electrode manufacturing process of Example 8, Copolymer D was used instead of Copolymer A.

### <Example 12>

A rechargeable battery cell was manufactured in the same manner as in Example 8, except that in the negative electrode manufacturing process of Example 8, Copolymer E was used instead of Copolymer A.

### <Example 13>

In the negative electrode production process of Example 13, a rechargeable battery cell was manufactured in the same procedure as Example 8, except that Copolymer F was used instead of Copolymer A and the amount of ion-exchanged water was changed to 40.35 g.

### <Example 14>

In the negative electrode production process of Example 14, a rechargeable battery cell was manufactured in the same procedure as Example 8, except that Copolymer G was used instead of Copolymer A and the amount of ion-exchanged water was changed to 56.77 g.

### <Example 15>

In the negative electrode manufacturing process of Example 15, 8.0 g of a silicon-carbon composite active material as a Si-based active material, 46.0 g of artificial graphite active material and 46.0 g of natural graphite active material as a graphite-based active material, 3.24 g of an aqueous solution including 9.5 wt% of Copolymer D, 59.77 g of an aqueous solution including 1.2 wt% of CMC, 5.12 g of a dispersion including 0.4 wt% of carbon nanotubes (including 0.6 wt% of CMC as a dispersant), and 41.84 g of ion-exchanged water were mixed, and then 3.59 g of an aqueous dispersion including 40 wt% of a particulate dispersed body made of a modified styrene butadiene copolymer was added thereto to prepare a negative electrode slurry. A rechargeable battery cell was manufactured in the same manner as in Example 1, except that the formulation of the negative electrode slurry was changed.

### <Comparative Example 1>

In the negative electrode manufacturing process of Comparative Example 1, 8.0 g of a silicon-carbon composite active material as a Si-based active material, 46.0 g of artificial graphite active material and 46.0 g of natural graphite active material as a graphite-based active material, 32.56 g of an aqueous solution including 9.5 wt% of Copolymer A, 5.15 g of a dispersion including 0.4 wt% of carbon nanotubes (including 0.6 wt% of CMC as a dispersant), and 77.17 g of ion-exchanged water were mixed to prepare a negative electrode slurry. The negative electrode slurry was coated on copper foil and dried in the same procedure as in Example 1, but cracks occurred in the negative electrode mixture layer during coating and drying. Then, a press process using a roll press machine was performed in the same procedure as in Example 1, but the condition in which cracks had occurred in the negative electrode mixture layer was not improved, and thus a rechargeable battery cell could not be manufactured.

### <Comparative Example 2>

In the negative electrode manufacturing process of Comparative Example 2, 8.0 g of a silicon-carbon composite active material as a Si-based active material, 46.0 g of artificial graphite active material and 46.0 g of natural graphite active material as a graphite-based active material, 32.56 g of an aqueous solution including 9.5 wt% of Copolymer D, 5.15 g of a dispersion including 0.4 wt% of carbon nanotubes (including 0.6 wt% of CMC as a dispersant), and 77.17 g of ion-exchanged water were mixed to prepare a negative electrode slurry. The negative electrode slurry was coated on copper foil and dried in the same procedure as in Example 1, but cracks occurred in the negative electrode mixture layer during coating and drying. Then, a press process using a roll press machine was performed in the same procedure as in Example 1, but the condition in which cracks had occurred in the negative electrode mixture layer was not improved, and thus a rechargeable battery cell could not be manufactured.

### <Comparative Example 3>

In the negative electrode manufacturing process of Comparative Example 3, 8.0 g of a silicon-carbon composite active material as a Si-based active material, 46.0 g of artificial graphite active material and 46.0 g of natural graphite active material as a graphite-based active material, 21.70 g of an aqueous solution including 9.5 wt% of Copolymer A, 85.91 g of an aqueous solution including 1.2 wt% of CMC, 5.15 g of a dispersion including 0.4 wt% of carbon nanotubes (including 0.6 wt% of CMC as a dispersant), and 27.11 g of ion-exchanged water were mixed to prepare a negative electrode slurry. The negative electrode slurry was coated on copper foil and dried in the same procedure as in Example 1, but cracks occurred in the negative electrode mixture layer during coating and drying. Then, a press process using a roll press machine was performed in the same procedure as in Example 1, but the condition in which cracks had occurred in the negative electrode mixture layer was not improved, and thus a rechargeable battery cell could not be manufactured.

### <Comparative Example 4>

In the negative electrode manufacturing process of Comparative Example 4, 8.0 g of a silicon-carbon composite active material as a Si-based active material, 46.0 g of artificial graphite active material and 46.0 g of natural graphite active material as a graphite-based active material, 21.70 g of an aqueous solution including 9.5 wt% of Copolymer D, 85.91 g of an aqueous solution including 1.2 wt% of CMC, 5.15 g of a dispersion including 0.4 wt% of carbon nanotubes (including 0.6 wt% of CMC as a dispersant), and 27.11 g of ion-exchanged water were mixed to prepare a negative electrode slurry. The negative electrode slurry was coated on copper foil and dried in the same procedure as in Example 1, but cracks occurred in the negative electrode mixture layer during coating and drying. Then, a press process using a roll press machine was performed in the same procedure as in Example 1, but the condition in which cracks had occurred in the negative electrode mixture layer was not improved, and thus a rechargeable battery cell could not be manufactured.

### <Comparative Example 5>

A rechargeable battery cell was manufactured in the same manner as in Example 1, except that in the negative electrode manufacturing process of Example 1, Copolymer H was used instead of Copolymer A.

### <Comparative Example 6>

A rechargeable battery cell was manufactured in the same manner as in Example 1, except that in the negative electrode manufacturing process of Example 1, Copolymer I was used instead of Copolymer A.

### <Comparative Example 7>

A rechargeable battery cell was manufactured in the same manner as in Example 1, except that in the negative electrode manufacturing process of Example 1, Copolymer J was used instead of Copolymer A.

### <Comparative Example 8>

In the negative electrode manufacturing process of Example 1, a rechargeable battery cell was manufactured in the same procedure as Example 1, except that Copolymer L was used instead of Copolymer A and the amount of ion-exchanged water was changed to 83.89 g.

### <Comparative Example 9>

In the negative electrode manufacturing process of Comparative Example 9, a rechargeable battery cell was manufactured in the same procedure as Example 1, except that Copolymer M was used instead of Copolymer A and the amount of ion-exchanged water was changed to 83.89 g.

### <Comparative Example 10>

In the negative electrode manufacturing process of Comparative Example 10, 8.0 g of a silicon-carbon composite active material as a Si-based active material, 46.0 g of artificial graphite active material and 46.0 g of natural graphite active material as a graphite-based active material, 21.75 g of an aqueous solution including 9.5 wt% of Copolymer N, 5.17 g of a dispersion including 0.4 wt% of carbon nanotubes (including 0.6 wt% of CMC as a dispersant), and 51.31 g of ion-exchanged water were mixed, and then 3.10 g of an aqueous dispersion including 40 wt% of a particulate dispersed body made of a modified styrene butadiene copolymer was added thereto to prepare a negative electrode slurry. A rechargeable battery cell was manufactured in the same manner as in Example 1, except that the formulation of the negative electrode slurry was changed and the coating amount (areal density) of the dried negative electrode mixture layer was changed to 14.2 mg/cm² per one surface.

### <Comparative Example 11>

A rechargeable battery cell was manufactured in the same manner as in Example 8, except that in the negative electrode manufacturing process of Example 8, Copolymer H was used instead of Copolymer A.

### <Comparative Example 12>

A rechargeable battery cell was manufactured in the same manner as in Example 8, except that in the negative electrode manufacturing process of Example 8, Copolymer I was used instead of Copolymer A.

### <Comparative Example 13>

A rechargeable battery cell was manufactured in the same manner as in Example 8, except that in the negative electrode manufacturing process of Example 8, Copolymer J was used instead of Copolymer A.

### <Comparative Example 14>

In the negative electrode production process of Comparative Example 14, a rechargeable battery cell was manufactured in the same procedure as Example 8, except that Copolymer L was used instead of Copolymer A and the amount of ion-exchanged water was changed to 52.41 g.

### <Comparative Example 15>

In the negative electrode production process of Comparative Example 15, a rechargeable battery cell was manufactured in the same procedure as Example 8, except that Copolymer M was used instead of Copolymer A and the amount of ion-exchanged water was changed to 52.41 g.

### <Comparative Example 16>

In the negative electrode production process of Comparative Example 16, a rechargeable battery cell was manufactured in the same procedure as Example 8, except that Copolymer N was used instead of Copolymer A and the amount of ion-exchanged water was changed to 33.04 g.

### <Comparative Example 17>

In the negative electrode manufacturing process of Comparative Example 17, 8.0 g of a silicon-carbon composite active material as a Si-based active material, 46.0 g of artificial graphite active material and 46.0 g of natural graphite active material as a graphite-based active material, 85.38 g of an aqueous solution including 1.2 wt% of CMC, 5.12 g of a dispersion including 0.4 wt% of carbon nanotubes (including 0.6 wt% of CMC as a dispersant), and 24.02 g of ion-exchanged water were mixed, and then 3.59 g of an aqueous dispersion including 40 wt% of a particulate dispersed body made of a modified styrene butadiene copolymer was added thereto to prepare a negative electrode slurry. A rechargeable battery cell was manufactured in the same manner as in Example 1, except that the formulation of the negative electrode slurry was changed.

### <Evaluation of Negative Electrode Slurry, Negative Electrode, and Rechargeable Battery Cell>

### (Change in Viscosity of Negative Electrode Slurry)

In Examples 1 to 15 and Comparative Examples 1 to 17, viscosity stability was evaluated by comparing negative electrode slurry viscosity right after the preparation with negative electrode slurry viscosity after storing for 24 hours under stirring at 40 rpm and room temperature. On the other hand, the slurry viscosity (unit: mPa·s) was measured by using a B type viscometer at 25 °C and 30 rpm. Evaluation criteria are shown below. The viscosity listed in the table is the viscosity immediately after preparation.
O: The negative electrode slurry after storage for 24 hours with respect to that immediately after preparation is within the range of greater than or equal to 50% and less than or equal to 150%.
△: The negative electrode slurry viscosity increases by greater than 50% after 24 hours of storage with respect to immediately after preparation.
×: The negative electrode slurry viscosity decreases to less than 50% after 24 hours of storage with respect to immediately after preparation.

### (Coating Suitability)

In Examples 1 to 15 and Comparative Examples 1 to 17, in the process of coating and drying the negative electrode slurry on copper foil, coating suitability (i.e., coating property) was evaluated by observing whether cracks occurred in the negative electrode mixture layer during coating and drying. Evaluation criteria are shown below.
∘: No cracks occurred
△: Cracks partially occurred
×: Cracks occurred on the entire surface

### (Electrode Plate Flexibility)

The negative electrodes of Examples 1 to 15 and Comparative Examples 1 to 17 were pressed and cut into a rectangle with a width of 30 mm and a length of 500 mm. Subsequently, the negative electrodes were wound around a round bar with a diameter of 2.5 mm in a dry room under an environment with a dew point of -40 °C and then, evaluated with respect to electrode plate flexibility by checking whether or not each negative electrode mixture layer was cracked. Evaluation criteria are shown below.
∘: No cracks occurred
△: Cracks partially occurred
×: Cracks occurred on the entire surface

### (Close-contacting Properties)

The negative electrodes according to Examples 1 to 15 and Comparative Examples 5 to 17 were respectively pressed and cut into a rectangle with a width of 25 mm and a length of 100 mm. Subsequently, an active material side of each cut negative electrode was attached onto a stainless steel plate by using a double-sided adhesive tape, preparing a sample for evaluating close-contacting property. The sample was mounted on a peel tester (EZ-S, SHIMAZU Corp.) and measured with respect to 180 ° peel strength.

### (High-temperature Cycle Characteristics)

The rechargeable battery cells of Examples 1 to 15 and Comparative Examples 5 to 17 were constant current-charged to 4.3 V at design capacity of 0.1 CA and subsequently, constant voltage-charged at 4.3 V to 0.05 CA in a thermostat at 25 °C. Subsequently, the constant current discharge was conducted to 2.5 V at 0.1 CA. In addition, the cells were 2 cycles constant current-charged at 0.2 CA, constant voltage-charged at 0.05 CA and then, constant current-discharged at 0.2 CA under conditions of charge cut-off voltage of 4.3 V and discharge cut-off voltage of 2.5 V in the 25 °C thermostat.

Subsequently, the rechargeable battery cells were 200 cycles constant current-charged at 1.0 CA and constant voltage-charged at 0.05 CA and then, constant current discharged at 1.0 CA under conditions of a charge cut-off voltage of 4.3 V and a discharge cut-off voltage of 2.5 V at 45 °C to conduct a life-span test. Herein, discharge capacity C1 at the 1^{st} cycle and discharge capacity C2 at the 200^{th} cycle were used to calculate capacity retention rate represented by (C1/C2)×100(%).

### (Mixture Layer Peeling After High-temperature Cycle)

In the evaluation of the high-temperature cycle characteristics described above, the battery cells after the 200-cycle test were disassembled and the negative electrodes were taken out. The taken out negative electrodes were observed with the naked eye and evaluated according to the following criteria.
O: No peeling of the negative electrode mixture layer to the base copper foil.
△: There are places where the negative electrode mixture layer has partially peeled off from the base copper foil.
×: The entire negative electrode mixture layer peels off from the base copper foil.

### (Evaluation Results)

The evaluation results of Examples 1 to 15 and Comparative Examples 1 to 17 are summarized in Tables 2 and 3.

**(Table 2)**

| | Negative electrode binder composition (wt%) | Amount ratio (wt%) | Negative electrode slurry | |
|---|---|---|---|---|
| | | water-soluble copolymer/(neg ative electrode active material + nega tive electrode binder) | Viscosity (mPa·s) | Viscosity stability |
| Example 1 | Copolymer A + SBR (1.2+1.2) | 1.2 | 3220 | ○ |
| Example 2 | Copolymer B + SBR (1.2+1.2) | 1.2 | 3200 | ○ |
| Example 3 | Copolymer C + SBR (1.2+1.2) | 1.2 | 3140 | ○ |
| Example 4 | Copolymer D + SBR (1.2+1.2) | 1.2 | 3100 | ○ |
| Example 5 | Copolymer E + SBR (1.2+1.2) | 1.2 | 2900 | ○ |
| Example 6 | Copolymer F + SBR (2.0+1.2) | 2.0 | 3000 | ○ |
| Example 7 | Copolymer G + SBR (1.0+1.2) | 1.0 | 3050 | ○ |
| Example 8 | Copolymer A + CMC+SBR (0.5+0.5+1.4) | 1.0 | 2990 | ○ |
| Example 9 | Copolymer B + CMC+SBR (0.5+0.5+1.4) | 1.0 | 2960 | ○ |
| Example 10 | Copolymer C + CMC+SBR (0.5+0.5+1.4) | 1.0 | 2860 | ○ |
| Example 11 | Copolymer D + CMC+SBR (0.5+0.5+1.4) | 1.0 | 2830 | ○ |
| Example 12 | Copolymer E + CMC+SBR (0.5+0.5+1.4) | 1.0 | 2720 | ○ |
| Example 13 | Copolymer F + CMC+SBR (0.5+0.5+1.4) | 1.0 | 3010 | ○ |
| Example 14 | Copolymer G + CMC+SBR (0.5+0.5+1.2) | 1.0 | 2970 | ○ |
| Example 15 | Copolymer D + CMC+SBR (0.3+0.7+1.4) | 1.0 | 2950 | ○ |
| Comparative Example 1 | Copolymer A (3.0) | 3.0 | 3450 | ○ |
| Comparative Example 2 | Copolymer D (3.0) | 3.0 | 3410 | ○ |
| Comparative Example 3 | Copolymer A+CMC (2.0+1.0) | 3.0 | 3350 | ○ |
| Comparative Example 4 | Copolymer D+CMC (2.0+1.0) | 3.0 | 3220 | ○ |
| Comparative Example 5 | Copolymer H + SBR (1.2+1.2) | 1.2 | 3010 | ○ |
| Comparative Example 6 | Copolymer I + SBR (1.2+1.2) | 1.2 | 2980 | ○ |
| Comparative Example 7 | Copolymer J + SBR (1.2+1.2) | 1.2 | 3200 | ○ |
| Comparative Example 8 | Copolymer L + SBR (1.2+1.2) | 1.2 | 3340 | Δ |
| Comparative Example 9 | Copolymer M + SBR (1.2+1.2) | 1.2 | 3410 | Δ |
| Comparative Example 10 | Copolymer N + SBR (2.0+1.2) | 2.0 | 2990 | × |
| Comparative Example 11 | Copolymer H + CMC + SBR (0.5+0.5+1.4) | 1.0 | 2890 | ○ |
| Comparative Example 12 | Copolymer I + CMC + SBR (0.5+0.5+1.2) | 1.0 | 2820 | ○ |
| Comparative Example 13 | Copolymer J + CMC + SBR (0.5+0.5+1.2) | 1.0 | 2930 | ○ |
| Comparative Example 14 | Copolymer L + CMC + SBR (0.5+0.5+1.2) | 1.0 | 3370 | ○ |
| Comparative Example 15 | Copolymer M + CMC + SBR (0.5+0.5+1.2) | 1.0 | 3390 | ○ |
| Comparative Example 16 | Copolymer N + CMC + SBR (0.5+0.5+1.2) | 1.0 | 3010 | × |
| Comparative Example 17 | CMC+SBR (1.0+1.2) | 1.0 | 2980 | ○ |

**(Table 3)**

| | Coating property | Electrode plate flexibility | Close-contacting property (gf/mm) | High-temperatur e cycle capacity retention rate (%) | Peeling off of mixture layer after high-temperature cycle |
|---|---|---|---|---|---|
| Example 1 | ○ | ○ | 1.6 | 85 | ○ |
| Example 2 | ○ | ○ | 1.6 | 85 | ○ |
| Example 3 | ○ | ○ | 1.7 | 86 | ○ |
| Example 4 | ○ | ○ | 1.7 | 86 | ○ |
| Example 5 | ○ | ○ | 1.7 | 85 | ○ |
| Example 6 | ○ | ○ | 1.4 | 86 | ○ |
| Example 7 | ○ | ○ | 1.6 | 85 | ○ |
| Example 8 | ○ | ○ | 1.1 | 84 | ○ |
| Example 9 | ○ | ○ | 1.1 | 84 | ○ |
| Example 10 | ○ | ○ | 1.2 | 85 | ○ |
| Example 11 | ○ | ○ | 1.2 | 85 | ○ |
| Example 12 | ○ | ○ | 1.3 | 84 | ○ |
| Example 13 | ○ | ○ | 1.0 | 84 | ○ |
| Example 14 | ○ | ○ | 1.2 | 84 | ○ |
| Example 15 | ○ | ○ | 1.1 | 84 | ○ |
| Comparative Example 1 | × | × | Negative electrode was not formed | | |
| Comparative Example 2 | × | × | | | |
| Comparative Example 3 | × | × | | | |
| Comparative Example 4 | × | × | | | |
| Comparative Example 5 | ○ | ○ | 1.3 | 75 | Δ |
| Comparative Example 6 | ○ | ○ | 1.4 | 75 | Δ |
| Comparative Example 7 | Δ | Δ | 0.7 | 77 | Δ |
| Comparative Example 8 | ○ | ○ | 0.5 | 68 | × |
| Comparative Example 9 | ○ | ○ | 0.4 | 67 | × |
| Comparative Example 10 | ○ | ○ | 1.0 | 68 | Δ |
| Comparative Example 11 | ○ | ○ | 1.1 | 73 | Δ |
| Comparative Example 12 | ○ | ○ | 1.1 | 73 | Δ |
| Comparative Example 13 | ○ | ○ | 0.7 | 75 | Δ |
| Comparative Example 14 | ○ | ○ | 0.7 | 66 | × |
| Comparative Example 15 | ○ | ○ | 0.6 | 65 | × |
| Comparative Example 16 | ○ | ○ | 0.7 | 66 | × |
| Comparative Example 17 | ○ | ○ | 1.0 | 65 | × |

### (Review on the Results of Examples and Comparative Examples)

Examples 1 to 15, as shown in Tables 2 and 3, which used a combination of a water-soluble polymer and an SBR dispersion, improved problems such as poor coating properties, crack generation, or lack of electrode plate flexibility, which were found in Comparative Examples 1 to 4 which used the water-soluble polymer alone as a negative electrode binder.

In addition, comparing Examples 1 to 15, compared with Comparative Examples 5, 6, 11, and 12, Examples 1 to 15, which adopted a combination of a water-soluble polymer and a particle-phased dispersion and also, contained an AA-NaSS-AN-based copolymer as the water-soluble polymer, did not only maintain equivalent coating properties of negative electrode slurry, electrode plate flexibility, and close contacting properties of negative electrode mixture layer with negative electrode current collector to those of Comparative Examples 5, 6, 11, and 12, which used a conventional AA-AN-based copolymer, but also greatly improved cycle capacity retention rate at a high temperature and suppression of a negative electrode mixture layer peeling during cycles at a high temperature, compared with these comparative examples.

In addition, referring to the results of Table 2, Examples 1 to 15, in which the AA-NaSS-AN-based copolymer had a weight average molecular weight within a range of 300,000 or more and 2,000,000 or less, improved viscosity stability of negative electrode slurry, compared with Comparative Examples 8 to 10, which used Copolymers L, M, and N having a weight average molecular weight out of the range, regardless of containing CMC and in addition, suppressed negative electrode mixture layer peeling after the high temperature cycles, compared with Comparative Examples 8 to 10 and 14 to 16, which used Copolymers L, M, and N.

While this disclosure has been described in connection with what is presently considered to be practical example embodiments, it is to be understood that the disclosure is not limited to the disclosed embodiments. On the contrary, it is intended to cover various modifications and equivalent arrangements included within the scope of the appended claims.

## Claims

1. A negative electrode slurry, comprising
a negative electrode active material comprising a first active material containing silicon atoms in an amount of greater than or equal to about 5 wt% and less than or equal to about 100 wt%;
a binder for binding the negative electrode active material; and
a solvent for negative electrode slurry dispersing the negative electrode active material and the binder,
wherein the first active material contains silicon atoms in an amount of greater than or equal to about 20 wt% and less than or equal to about 100 wt%,
the binder comprises a particulate dispersed body and a water-soluble copolymer,
the water-soluble copolymer comprises a copolymer containing an acrylic acid-based monomer unit, a sodium styrene sulfonate monomer unit, and an acrylonitrile-based monomer unit,
a weight average molecular weight of the copolymer is about 300,000 to about 2,000,000,
when a sum of the negative electrode active material and the binder is 100 wt%, an amount of the water-soluble copolymer is greater than or equal to about 0.5 wt% and less than or equal to about 2 wt%.

2. The negative electrode slurry as claimed in claim 1, wherein
an amount of the acrylonitrile-based monomer unit in the copolymer is greater than or equal to about 10 wt% and less than or equal to about 50 wt% based on 100 wt% of the copolymer.

3. The negative electrode slurry as claimed in claim 1 or claim 2, wherein
the solvent for the negative electrode slurry is an aqueous solvent.

4. The negative electrode slurry as claimed in any one of claims 1 to 3, wherein
the first active material comprises at least one selected from a composite of silicon-containing particulates and a carbon material, silicon particulates, and an alloy containing silicon as a base material.

5. The negative electrode slurry as claimed in any one of claims 1 to 4, wherein
an amount of the sodium styrene sulfonate monomer unit in the copolymer is greater than or equal to about 10 wt% and less than or equal to about 50 wt% based on 100 wt% of the copolymer.

6. The negative electrode slurry as claimed in any one of claims 1 to 5, wherein
the copolymer further comprises a monomer unit copolymerizable with the acrylic acid-based monomer unit, the sodium styrene sulfonate monomer unit, or the acrylonitrile-based monomer unit.

7. The negative electrode slurry as claimed in any one of claims 1 to 6, wherein
the water-soluble copolymer further comprises a cellulose ether containing a carboxymethyl group or a salt of a cellulose ether containing a carboxymethyl group.

8. The negative electrode slurry as claimed in any one of claims 1 to 7, wherein
the negative electrode slurry has a viscosity at 25 °C of greater than or equal to about 1000 mPa s and less than or equal to about 5000 mPa·s.

9. The negative electrode slurry as claimed in any one of claims 1 to 8, wherein
the negative electrode active material further comprises a graphite-based active material as a second active material.

10. The negative electrode slurry as claimed in any one of claims 1 to 9, wherein
the negative electrode slurry further comprises a conductive agent.

11. A negative electrode, comprising
a solid component of the negative electrode slurry as claimed in any one of claim 1 to claim 10.

12. The negative electrode as claimed in claim 11, wherein
the negative electrode has an areal capacity of greater than or equal to about 3.5 mAh/cm² and less than or equal to about 10 mAh/cm².

13. A non-aqueous electrolyte rechargeable battery comprising the negative electrode as claimed in claim 11 or claim 12.
